(19) Europäisches Patentamt
European Patent Office
Office européen des brevets

(11) **EP 3 402 923 B1**

(12) **FASCICULE DE BREVET EUROPEEN**

(45) Date de publication et mention de la délivrance du brevet:
**11.03.2020 Bulletin 2020/11**

(21) Numéro de dépôt: **17702425.4**

(22) Date de dépôt: **11.01.2017**

(51) Int Cl.:
*D06N 3/12* (2006.01)    *C09D 167/00* (2006.01)
*D06M 15/507* (2006.01)    *D03D 15/00* (2006.01)
*C09D 5/00* (2006.01)    *C09D 7/00* (2018.01)
*D06N 3/00* (2006.01)    *C08K 5/00* (2006.01)
*C08K 5/092* (2006.01)    *C09D 171/00* (2006.01)
*C08L 1/10* (2006.01)    *D02G 3/18* (2006.01)
*D03D 1/00* (2006.01)    *D06N 3/02* (2006.01)
*C09D 7/40* (2018.01)    *C09D 7/63* (2018.01)
*C08L 71/00* (2006.01)    *D06N 3/04* (2006.01)

(86) Numéro de dépôt international:
**PCT/FR2017/050054**

(87) Numéro de publication internationale:
**WO 2017/121952 (20.07.2017 Gazette 2017/29)**

(54) **COMPOSITION D'APPRET POUR TOILE A PEINDRE ET PRODUITS OBTENUS**

DECKZUSAMMENSETZUNG FÜR ANSTREICHBAREN STOFF UND ERHALTENE PRODUKTE

FINISHING COMPOSITION FOR PAINTABLE CLOTH AND PRODUCTS OBTAINED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.01.2016 FR 1650244**

(43) Date de publication de la demande:
**21.11.2018 Bulletin 2018/47**

(73) Titulaire: **Saint-Gobain Adfors**
**FR-92400 Courbevoie (FR)**

(72) Inventeurs:
• **GARCIA, Alexandre**
**75018 Paris (FR)**

• **DEKONINCK, Alexandra**
**95600 Eaubonne (FR)**

(74) Mandataire: **Saint-Gobain Recherche**
**Département Propriété Industrielle**
**39 Quai Lucien Lefranc**
**93300 Aubervilliers (FR)**

(56) Documents cités:
WO-A1-2012/138723    WO-A1-2014/024939
WO-A1-2015/004404    JP-A- S5 891 775
US-A1- 2009 068 416

**Description**

La présente invention se rapporte au domaine des toiles à peindre constituées d'un tissu à base de fils inorganiques, notamment en verre, ou organiques, et d'un apprêt, destinées à être utilisées en tant que revêtement mural de bâtiments, en particulier à usage d'habitation.

L'invention concerne plus particulièrement une composition aqueuse d'apprêt apte à réticuler sous l'effet de la chaleur qui renferme un polyglycérol, un acide organique polycarboxylique, un catalyseur de réticulation, un agent plastifiant et un agent épaississant.

Le document WO2012/0138723 A1 divulgue une composition aqueuse de liant utilisée comme revêtement pour des tapis non-tissés de verre, comprenant de la maltodextrine, d'acide citrique, de polyglycérol, de gamma-aminopropyl triéthoxysilane et d'hypophosphite de sodium.

La fabrication de toiles à peindre comprend généralement une étape consistant à tisser des fils, par exemple de verre, pour former un tissu, suivie de l'application d'une composition aqueuse d'apprêt sur le tissu formé, puis d'un traitement thermique afin d'éliminer l'eau. Dans la toile à peindre ainsi obtenue, l'apprêt lie les fils de verre entre eux et occulte au moins partiellement l'ouverture des mailles du tissu. La toile à peindre obtenue possède une stabilité dimensionnelle élevée qui lui permet de résister aux diverses manipulations indispensables pour sa mise en place telles que la découpe en lés, le collage sur le support et l'application de peinture.

Les compositions d'apprêt traditionnellement utilisées sont des solutions ou des dispersions aqueuses qui contiennent un ou plusieurs amidons et des polymères renfermant des résidus d'acide (méth)acrylique ou de (méth)acrylate, et éventuellement divers additifs. Pendant le traitement thermique, ces compositions d'apprêt émettent des quantités non négligeables de composés organiques volatils (COV), dont du formaldéhyde, qui se retrouvent dans les fumées des cheminées du site de production.

La réglementation de plus en plus contraignante en matière de protection des opérateurs et de l'environnement oblige les fabricants de toile à peindre à rechercher des solutions permettant d'abaisser encore les niveaux d'émissions de COV et par conséquent de réduire les coûts de traitement des fumées.

L'invention s'intéresse tout particulièrement à l'obtention d'une composition aqueuse d'apprêt à faible émission de COV, et plus particulièrement de formaldéhyde, pouvant être appliquée sur les deux faces du tissu de verre au moyen d'un dispositif dénommé « screen-to-screen » en anglais. Ce dispositif, décrit notamment dans WO 2010/070248, est constitué de deux rouleaux comportant chacun une tubulure centrale d'amenée de la composition d'apprêt sous pression et des perforations dans la zone périphérique de chaque rouleau au travers desquelles passe ladite composition qui est déposée par contact sur chaque face du tissu. Ce dispositif requiert une composition d'apprêt ayant des propriétés rhéologiques particulières, notamment une viscosité contrôlée pour que l'application s'effectue de manière uniforme sur chaque face de la toile à peindre.

Ainsi, la composition aqueuse d'apprêt selon la présente invention possède des propriétés rhéologiques adaptées au mode d'application « screen-to-screen », a la capacité de réticuler sous l'effet de la chaleur en émettant une faible quantité de composés organiques volatils (COV), notamment en formaldéhyde et présente des propriétés mécaniques améliorées, notamment un bon compromis entre la résistance à la traction et la raideur en flexion.

La composition aqueuse d'apprêt selon l'invention comprend

- au moins un polyglycérol,
- au moins un acide organique renfermant au moins trois groupes carboxyles,
- au moins un catalyseur d'estérification,
- au moins un agent plastifiant, et
- au moins un agent épaississant choisi parmi les dérivés de la cellulose, les succinoglycans et les xanthanes.

Le polyglycérol conforme à l'invention est un oligomère de glycérol présentant un degré de polymérisation qui varie de 2 à 20, de préférence 2 à 10 et mieux encore de 2 à 8. De préférence, on choisit le diglycérol ou un mélange de polyglycérols contenant au moins 50 % en poids de diglycérol, de triglycérol et de tétraglycérol, et avantageusement un mélange de diglycérol et de triglycérol.

Dans la composition d'apprêt, le polyglycérol représente 10 à 60 % du poids total des matières solides, de préférence 20 à 50 % et avantageusement de 20 à 45 %.

L'acide organique conforme à l'invention comprend au moins trois groupes carboxyles, lesquels groupes sont aptes à réagir avec les groupes hydroxyles du polyglycérol sous l'effet de la chaleur pour former des liaisons esters qui conduisent à l'obtention d'un réseau polymérique dans le liant organique final.

L'acide organique renferme 3 à 15 groupes carboxyles, et de préférence 3 ou 4.

Dans un souci de simplification, « l'acide organique comprenant au moins trois groupes carboxyles » est dénommé « acide organique polycarboxylique » dans la suite du texte.

L'acide organique polycarboxylique peut se présenter sous la forme d'un monomère ou d'un polymère d'acide organique.

De préférence, l'acide organique polycarboxylique est un monomère et il présente sous la forme d'un acide acyclique saturé ou insaturé, ramifié ou non, d'un acide cyclique ou d'un acide aromatique. De manière générale, l'acide organique polycarboxylique a une masse molaire en nombre inférieure ou égale à 1000, de préférence inférieure ou égale à 750, avantageusement inférieure ou égale à 500 et mieux encore supérieure à 180.

A titre d'exemples, on peut citer les acides tricarboxyliques tels que l'acide citrique, l'acide tricarballylique, l'acide 1,2,4-butanetricarboxylique, l'acide aconitique, l'acide hémimellitique, l'acide triméllitique et l'acide trimésique, et les acides tétracarboxyliques tels que l'acide 1,2,3,4-butanetétracarboxylique (BTCA) et l'acide pyroméllitique. L'acide citrique et l'acide 1,2,3,4-butanetétracarboxylique sont préférés.

Dans la composition d'apprêt, l'acide organique polycarboxylique représente 10 à 50 % du poids total des matières solides, de préférence 15 à 40 %.

L'acide organique polycarboxylique représente 10 à 80 % du poids du mélange constitué par le polyglycérol et l'acide organique polycarboxylique, de préférence 20 à 70 %, et avantageusement 30 à 65 %.

Le catalyseur d'estérification a pour fonction d'accroître la vitesse de la réaction entre le polyglycérol et l'acide organique polycarboxylique.

Le catalyseur d'estérification peut être choisi parmi les bases et les acides de Lewis, tels que les argiles, la silice colloïdale ou non, les amines organiques, les amines quaternaires, les oxydes métalliques, les sulfates métalliques, les chlorures métalliques, les sulfates d'urée, les chlorures d'urée et les catalyseurs à base de silicates.

Le catalyseur d'estérification peut également être un composé contenant du phosphore, par exemple un sel d'hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur d'estérification peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur d'estérification est l'hypophosphite de sodium, le phosphite de sodium et les mélanges de ces composés, et avantageusement l'hypophosphite de sodium.

Dans la composition d'apprêt, le catalyseur d'estérification représente 2 à 10 % du poids total des matières solides, de préférence 4 à 8 %.

Le catalyseur d'estérification représente 0,5 à 25 % du poids du mélange constitué par le polyglycérol et l'acide organique polycarboxylique, de préférence 5 à 20 %, et avantageusement 7 à 16 %.

L'agent plastifiant selon l'invention est choisi parmi les composés qui limitent les interactions entre les composants de l'apprêt final lui conférant ainsi plus de souplesse et de flexibilité.

L'agent plastifiant est un polyester, en particulier un dialkyl ester d'acide gras, par exemple le di-n-butyl sébacate ; un diester d'isosorbide et d'acide(s) gras, en particulier d'origine végétale, notamment le Polysorb® ID 46 commercialisé par Roquette ; un monoglycéride acétylé d'acide gras hydroxylé, en particulier d'acide 12-hydroxystéarique, notamment le Grindsted® Soft-N-Safe commercialisé par Danisco; et un polyester polyol basé sur des dimères, notamment le Priplast® 1901 commercialisé par Croda.

Dans la composition d'apprêt, l'agent plastifiant représente 0,5 à 50 % du poids total des matières solides, de préférence 5 à 40 %, et avantageusement 10 à 35.

L'agent épaississant a pour fonction d'ajuster la viscosité de la composition d'apprêt pour permettre son application avec le dispositif screen-to-screen. En outre, il a été observé que l'agent épaississant est essentiel pour que la toile à peindre puisse avoir une résistance à la traction acceptable.

L'agent épaississant est choisi parmi les dérivés de la cellulose tels que les carboxyalkylcelluloses, notamment les carboxyméthylcelluloses, et les hydroxyalkylcelluloses, notamment les hydroxyéthyl méthyl celluloses, les succinoglycanes et les xanthanes. On préfère les carboxyméthylcelluloses.

Dans la composition d'apprêt, l'agent épaississant représente 0,5 à 25 % du poids total des matières solides, de préférence 2 à 20 %, et avantageusement 3 à 17 %.

La composition d'apprêt peut comprendre en outre les additifs conventionnels ci-après, dans les proportions suivantes exprimées en pourcentage des matières solides :

- 0 à 15 % de pigments, en particulier de couleur blanche tel que du $TiO_2$, et
- 0 à 20 % d'un composé apte à réagir avec le formaldéhyde, en particulier l'acétoacétamide ou le dihydrazide d'acide adipique.

La composition aqueuse d'apprêt ne contient aucun polyol autre que les polyglycérols et les polyester polyols utilisés en tant qu'agent plastifiant.

L'eau représente généralement 70 à 95 % du poids de la composition aqueuse d'apprêt, de préférence 85 à 92 %.

Comme indiqué précédemment, la composition aqueuse d'apprêt est destinée à être appliquée sur un tissu pour former une toile à peindre destinée à être appliquée sur un support mural ou un plafond. La toile à peindre constitue un autre objet de l'invention.

Le tissu formant la toile à peindre comprend des fils inorganiques, de préférence de verre, et/ou des fils organiques, notamment constitués d'au moins un polymère ou obtenus à partir de fibres végétales.

De préférence, le tissu est obtenu à partir de fils de verre composés d'une multitude de filaments de verre (ou fil de base) ou dérivés de ces fils, notamment les assemblages de ces fils de base en stratifils (« roving » en anglais), ou de fils mixtes comprenant au moins un fil de verre composé d'une multitude de filaments de verre et au moins un fil composé d'une multitude de filaments d'une matière organique thermoplastique telle que le polyéthylène ou le polypropylène, ou encore de fils « comêlés » constitués de filaments de verre et de filaments de la matière organique thermoplastique précitée qui sont intimement mélangés.

Les fils précités peuvent être des fils sans torsion ou des fils retordus.

Le verre entrant dans la constitution des fils peut être de tout type, par exemple E, C et AR (alcali-résistant). On préfère le verre E.

Le diamètre des filaments de verre constituant les fils peut varier dans une large mesure, par exemple de 5 à 30 $\mu$m. De la même manière, de larges variations peuvent survenir dans la masse linéique du fil qui peut aller de 34 à 1500 tex.

Avantageusement, la toile à peindre comprend, en chaîne, un fil de verre retordu (fil textile) et, en trame, un fil de verre sans torsion ayant subi un traitement visant à séparer les filaments de verre de manière à leur conférer du volume (ou fil « voluminisé »). La masse linéique des fils de chaîne et de trame varie de préférence de 50 à 500 tex.

De préférence, la toile à peindre possède une masse surfacique qui varie de 30 à 1000 g/m$^2$.

La quantité l'apprêt représente 15 à 40 % du poids de la toile à peindre finale, de préférence 20 à 35 %.

La fabrication de la toile à peindre selon l'invention peut être mise en œuvre dans une installation conventionnelle du type décrit dans WO 2010/070248 déjà mentionné.

Dans cette installation, le tissu déroulé à partir d'une bobine passe dans un dispositif screen-to-screen qui permet de déposer la composition d'apprêt sur les deux faces du tissu, puis dans un dispositif permettant d'éliminer l'eau et de réticuler les constituants de ladite composition pour former l'apprêt final.

Le dispositif screen-to-screen est constitué de deux rouleaux comportant chacun une tubulure centrale d'amenée de la composition d'apprêt sous pression. La zone périphérique des rouleaux est pourvue de perforations au travers desquelles passe la composition d'apprêt qui est déposée sur chaque face du tissu.

Le dispositif de séchage peut être constitué d'une série de rouleaux chauffés à une température identique ou à des températures différentes, et de préférence le premier rouleau est chauffé à une température supérieure à celle du dernier rouleau.

La température maximale à appliquer au niveau du premier rouleau dépend de la nature des fils qui constituent le tissu. A titre d'exemple, la température du premier rouleau est égale à 240°C et celle du dernier rouleau est égale à 110°C lorsque la totalité des fils est en verre.

D'autres dispositifs de séchage peuvent être utilisés, par exemple des dispositifs délivrant de l'air chaud ou opérant par rayonnement infrarouge.

La composition d'apprêt conforme à l'invention possède les propriétés requises pour lui permettre d'être utilisée aussi dans un procédé dans lequel le dispositif screen-to-screen est remplacé par un foulard. Le foulard est composé d'une paire de rouleaux agencés de telle sorte que le premier rouleau, inférieur, plonge dans un réservoir contenant la composition d'apprêt et le deuxième rouleau soit disposé au-dessus du premier rouleau. La quantité de composition d'apprêt est réglée par la distance entre les deux rouleaux.

Selon une variante, la composition d'apprêt peut inclure un ou plusieurs agents moussants pour l'application par foulardage sous la forme d'une mousse.

Les exemples qui suivent permettent d'illustrer l'invention sans toutefois la limiter.

Dans ces exemples,

- la résistance en traction des tissus, exprimée en N/5cm, est mesurée dans le sens transverse (à 45° par rapport à la direction donnée par les fils de chaîne) dans les conditions de la norme NF EN ISO 13934-1. La mesure de la résistance en traction est effectuée après la fabrication (RTf) et après un traitement de vieillissement (RTv) consistant à immerger le tissu dans de l'eau distillée à 80°C pendant 10 minutes.
- la résistance à l'eau est mesurée comme suit : on découpe un échantillon (longueur 15 cm ; largeur 5 cm) dans la toile à peindre, dans le sens transverse (à 45° par rapport à la direction donnée par les fils de chaîne). L'échantillon est suspendu par une extrémité et une masse de 500 g est accrochée à l'autre extrémité. L'échantillon est entièrement immergé dans de l'eau. On mesure le temps en secondes qui s'écoule entre l'immersion et le moment où l'échantillon commence à se déformer.

- la raideur en flexion est mesurée sur un échantillon rectangulaire (3,8 cm x 8,0 cm) découpé dans le sens machine (par rapport au sens de tissage) au moyen d'un appareil Lorentzen & Wettre, à 23°C et 50 % d'humidité relative.

L'échantillon est maintenu verticalement à une extrémité dans la plus petite dimension entre deux mors et une force horizontale est appliquée sur l'extrémité libre. On mesure la force appliquée pour un angle de flexion égal à 5° et on calcule la raideur S (en mN.m) selon la formule suivante :

$$S = 60 \times F \times L^2 / \pi \times \theta \times b$$

dans laquelle :

F     est la force mesurée pour atteindre un angle de 5° (en mN)
L     est la longueur utile de l'échantillon (0,05 m)
$\theta$     est l'angle de flexion (5°)
b     est la largeur de l'échantillon (0,038 m).

## EXEMPLES 1 A 10

On prépare une composition aqueuse d'apprêt contenant les constituants figurant dans le tableau 1, dans des quantités exprimées en pourcentage pondéral.

A des fins de comparaison, on prépare également deux compositions contenant de l'anhydride succinique (exemple comparatif C1) ou de l'acide succinique (exemple comparatif C2) et une composition (Référence) contenant les constituants suivants (en pourcentage pondéral) :

| | |
|---|---|
| - Copolymère styrène/acrylate de butyle (Acronal® S996 commercialisé par BASF) | 5,78 |
| - Copolymère ester acrylique/acrylonitrile (Acronal® LN579S commercialisé par BASF) | 3,40 |
| - Amidon modifié de pomme de terre Amitrolit® 8900 commercialisé par Agrana) | 1,66 |
| - Amidon de blé | 0,58 |
| - Carbonate d'ammonium zirconium | 0,80 |
| Arkophob®AZCS commercialisé par Auer Remy) | |
| - Carbonate de calcium (Hydrocarb® 90-GU commercialisé par Omya) | 3,92 |
| - Adoucissant à base de silicone (Cepolsoft® SIL commercialisé par Prochimica) | 0,37 |
| - Polyacrylate (Appretan® 2710 commercialisé par Archroma) | 1,65 |
| - Eau | 81,84 |

On utilise la composition d'apprêt selon ces exemples pour enduire un tissu de verre de masse surfacique égale à 110,2 g/m$^2$ constitué, en chaîne, de fils textiles (avec torsion) en verre ayant une masse linéique égale à 140 tex avec une réduction de 3 fils par cm et, en trame, de fils de verre (sans torsion ayant une masse linéique de 330 tex et une réduction de 1,9 fil par cm. La quantité d'apprêt appliqué sur le tissu est donnée dans le tableau 1.

L'application de la composition d'apprêt est effectuée par trempage qui consiste à immerger le tissu dans un bac contenant ladite composition d'apprêt puis à déposer le tissu sur un tapis aspirant de manière à éliminer l'excès d'apprêt. L'application par trempage est équivalente à l'application « screen-to-screen » mentionnée précédemment.

Le tissu est ensuite placé dans une étuve à 210°C pendant 6 minutes, excepté pour le tissu revêtu de la composition de Référence qui est traité à 200°C.

Le tableau 1 rassemble les mesures de la résistance à traction, après fabrication et après vieillissement, et de la raideur en flexion des toiles à peindre selon l'invention (exemples 1 à 10) et les exemples comparatifs C1 et C2, par rapport à l'exemple de Référence.

L'exemple 1 présente les meilleures performances mécaniques, avec une résistance à la traction RTF et RTv plus élevée que la Référence, et une raideur également plus élevée.

L'exemple 10 présente le meilleur compromis, avec en outre une excellente résistance à l'eau, comparable à celle de la Référence.

Les exemples comparatifs C1 et C2 mettant en œuvre l'acide succinique (acide dicarboxylique) ont une résistance à la traction RTf et RTv faible, une raideur insuffisante (la toile à peindre n'a pas de tenue) et aucune résistance à l'eau.

Tableau 1

| | Ex. 1 | Ex. 2 | Ex. 3 | Ex. 4 | Ex. 5 | Ex. 6 | Ex. 7 | Ex. 8 | Ex. 9 | Ex. 10 | C1 | C2 | Réf. |
|---|---|---|---|---|---|---|---|---|---|---|---|---|---|
| **Composition** | | | | | | | | | | | | | |
| - Diglycérol | 3,09 | 3,41 | 3,53 | 2,83 | 3,98 | 4,13 | 4,20 | 4,39 | 3,66 | 2,13 | 3,78 | 3,45 | - |
| - Acide organique | | | | | | | | | | | | | |
| • acide citrique | 3,79 | 3,30 | 3,13 | 2,31 | 2,44 | - | - | - | - | - | - | - | - |
| • BTCA | - | - | - | - | - | 2,34 | 2,23 | 1,95 | 2,23 | 2,34 | - | - | - |
| • anhydride succinique | - | - | - | - | - | - | - | - | - | - | 2,86 | - | - |
| • acide succinique | - | - | - | - | - | - | - | - | - | - | - | 3,34 | - |
| - Hypophosphite de sodium | 0,50 | 0,55 | 0,57 | 0,46 | 0,64 | 0,67 | 0,68 | 0,71 | 0,68 | 0,67 | 0,61 | 0,56 | - |
| - Agent plastifiant | | | | | | | | | | | | | |
| • monoglycéride acétylé d'acide hydroxystéarique[1] | 1,60 | 1,10 | 1,14 | 2,73 | 1,29 | 1,33 | 1,36 | 1,42 | 1,36 | 1,33 | 1,22 | 1,11 | - |
| • Polyester polyol[2] | - | - | - | - | - | - | - | - | 0,54 | 2,00 | - | - | - |
| - Agent épaississant | | | | | | | | | | | | | |
| • Carboxyméthylcellulose[3] | 160 | 1,60 | 1,59 | 1,59 | 1,61 | 1,49 | 1,49 | 1,49 | 1,49 | 1,49 | 1,49 | 1,50 | - |
| - Eau | 90,00 | 90,00 | 90,00 | 90,00 | 90,00 | 90,00 | 90,00 | 90,00 | 90,00 | 90,00 | 90,00 | 90,00 | - |
| **Taux d'apprêt (% poids de la toile à peindre)** | 32,4 | 33,1 | 33,4 | 33,0 | 31,4 | 31,9 | 32,6 | 30,8 | 32,6 | 31,9 | 28,9 | 31,4 | 34,9 |
| **Résistance à la traction (N/5 cm)** | | | | | | | | | | | | | |
| près la fabrication RTf | 140 | 66 | 47 | 30 | 28 | 47 | 33 | 28 | 55 | 71 | 11 | 8 | 96 |
| - après vieillissement RTv | 19 | 4 | 5 | 5 | 3 | 8 | 5 | 4 | 10 | 32 | 2 | 1 | 17 |
| **Raideur en flexion (mN.m)** | 6,43 | 3,33 | 2,33 | 1,91 | 1,42 | 2,90 | 2,23 | 1,71 | 2,55 | 5,08 | 0,67 | 0,57 | 5,48 |
| **Résistance à l'eau (s)** | n. d. | 17 | n. d. | 3 | 5 | 10 | 7 | 2 | > 30 | > 30 | 0 | 0 | > 30 |

n. d. : non déterminé
[1] Grindsted® Soft-N-Safe commercialisé par la société Danisco
[2] Priplast® 1901 commercialisé par la société Croda
[3] Finnfix® 30000 P commercialisé par la société CP KELCO

EP 3 402 923 B1

**Revendications**

1. Composition aqueuse d'apprêt, notamment pour toile à peindre, **caractérisée en ce qu'**elle comprend

   - au moins un polyglycérol,
   - au moins un acide organique polycarboxylique renfermant au moins trois groupes carboxyles,
   - au moins un catalyseur d'estérification,
   - au moins un agent plastifiant, et
   - au moins un agent épaississant choisi parmi les dérivés de la cellulose, les succinoglycanes et les xanthanes.

2. Composition selon la revendication 1, **caractérisée en ce que** le polyglycérol est un oligomère de glycérol présentant un degré de polymérisation variant de 2 à 20, de préférence 2 à 10 et avantageusement 2 à 8.

3. Composition selon la revendication 2, **caractérisée en ce que** le polyglycérol est le diglycérol ou un mélange de polyglycérols contenant au moins 50 % en poids de diglycérol, de triglycérol et de tétraglycérol, de préférence un mélange de diglycérol et de triglycérol.

4. Composition selon l'une des revendications 1 à 3, **caractérisée en ce que** le polyglycérol représente 10 à 60 % du poids total des matières solides, de préférence 20 à 50 % et avantageusement de 20 à 45 %.

5. Composition selon l'une des revendications 1 à 4, **caractérisée en ce que** l'acide organique polycarboxylique renferme 3 à 15 groupes carboxyles, et de préférence 3 ou 4.

6. Composition selon l'une des revendications 1 à 5, **caractérisée en ce que** l'acide organique polycarboxylique est un monomère ayant une masse molaire en nombre inférieure ou égale à 1000, de préférence inférieure ou égale à 750, avantageusement inférieure ou égale à 500 et mieux encore supérieure à 180.

7. Composition selon la revendication 6, **caractérisée en ce que** l'acide organique polycarboxylique est l'acide citrique, l'acide tricarballylique, l'acide 1,2,4-butanetricarboxylique, l'acide aconitique, l'acide hémimellitique, l'acide triméllitique et l'acide trimésique, l'acide 1,2,3,4-butanetétracarboxylique (BTCA) ou l'acide pyroméllitique, de préférence. L'acide citrique et l'acide 1,2,3,4-butanetétracarboxylique.

8. Composition selon l'une des revendications 1 à 7, **caractérisée en ce que** l'acide organique polycarboxylique représente 10 à 50 % du poids total des matières solides, de préférence 15 à 40 %.

9. Composition selon l'une des revendications 1 à 8, **caractérisée en ce que** l'acide organique polycarboxylique représente 10 à 80 % du poids du mélange constitué par le polyglycérol et l'acide organique polycarboxylique, de préférence 20 à 70 %, et avantageusement 30 à 65 %.

10. Composition selon l'une des revendications 1 à 9, **caractérisée en ce que** le catalyseur d'estérification est choisi parmi les bases et les acides de Lewis, les composés contenant du phosphore et les composés contenant du fluor et du bore.

11. Composition selon la revendication 10, **caractérisée en ce que** le catalyseur d'estérification est l'hypophosphite de sodium, le phosphite de sodium et les mélanges de ces composés, et de préférence l'hypophosphite de sodium.

12. Composition selon l'une des revendications 1 à 11, **caractérisée en ce que** le catalyseur d'estérification représente 2 à 10 % du poids total des matières solides, de préférence 4 à 8 %.

13. Composition selon l'une des revendications 1 à 12, **caractérisée en ce que** le catalyseur d'estérification représente 0,5 à 25 % du poids du mélange constitué par le polyglycérol et l'acide organique polycarboxylique, de préférence 5 à 20 %, et avantageusement 7 à 16 %.

14. Composition selon l'une des revendications 1 à 13, **caractérisée en ce que** l'agent plastifiant est un polyester, en particulier un dialkyl ester d'acide gras, un diester d'isosorbide et d'acide(s) gras, un monoglycéride acétylé d'acide gras hydroxylé, ou un polyester polyol basé sur des dimères.

15. Composition selon l'une des revendications 1 à 14, **caractérisée en ce que** l'agent plastifiant représente 0,5 à 50 % du poids total des matières solides, de préférence 5 à 40 %, et avantageusement 10 à 35.

16. Composition selon l'une des revendications 1 à 15, **caractérisée en ce que** l'agent épaississant est une carboxyalkylcellulose ou une hydroxyalkylcellulose.

17. Composition selon l'une des revendications 1 à 16, **caractérisée en ce que** l'agent épaississant représente 0,5 à 25 % du poids total des matières solides, de préférence 2 à 20 %, et avantageusement 3 à 17 %.

18. Toile à peindre comprenant des fils inorganiques et/ou organiques, **caractérisée en ce qu'**elle comprend un apprêt selon l'une des revendications 1 à 17.

19. Toile à peindre selon la revendication 18, **caractérisée en ce que** les fils inorganiques sont en verre et les fils organiques sont constitués d'au moins un polymère ou sont obtenus à partir de fibres végétales.

20. Toile à peindre selon la revendication 18 ou 19, **caractérisée en ce qu'**elle possède une masse surfacique qui varie de 30 à 1000 g/m$^2$.

21. Toile à peindre selon l'une des revendications 18 à 20, **caractérisée en ce que** l'apprêt représente 15 à 40 % du poids de la toile à peindre, de préférence 20 à 35 %.

**Patentansprüche**

1. Wässrige Grundierungszusammensetzung, insbesondere für anstreichbaren Stoff, **dadurch gekennzeichnet, dass** sie Folgendes umfasst

   - mindestens ein Polyglycerin,
   - mindestens eine organische Polycarbonsäure mit mindestens drei Carboxylgruppen,
   - mindestens einen Veresterungskatalysator,
   - mindestens einen Weichmacher und
   - mindestens ein Verdickungsmittel, ausgewählt aus Cellulosederivaten, Succinoglykanen und Xanthanen.

2. Zusammensetzung nach Anspruch 1, **dadurch gekennzeichnet, dass** das Polyglycerin ein Glycerinoligomer mit einem Polymerisationsgrad von 2 bis 20, vorzugsweise 2 bis 10 und vorteilhafterweise 2 bis 8, ist.

3. Zusammensetzung nach Anspruch 2, **dadurch gekennzeichnet, dass** das Polyglycerin Diglycerin oder eine Mischung von Polyglycerinen ist, die mindestens 50 Gew.- % Diglycerin, Triglycerin und Tetraglycerin, vorzugsweise eine Mischung von Diglycerin und Triglycerin enthält.

4. Zusammensetzung nach einem der Ansprüche 1 bis 3, **dadurch gekennzeichnet, dass** das Polyglycerin 10 bis 60 % des Gesamtgewichts der Feststoffe, vorzugsweise 20 bis 50 %, und vorteilhafterweise 20 bis 45 % darstellt.

5. Zusammensetzung nach einem der Ansprüche 1 bis 4, **dadurch gekennzeichnet, dass** die organische Polycarbonsäure 3 bis 15 und vorzugsweise 3 oder 4 Carboxylgruppen umfasst.

6. Zusammensetzung nach einem der Ansprüche 1 bis 5, **dadurch gekennzeichnet, dass** die organische Polycarbonsäure ein Monomer mit einer zahlenmäßigen molaren Masse von kleiner oder gleich 1000, vorzugsweise kleiner oder gleich 750, vorteilhafterweise kleiner oder gleich 500 und am meisten bevorzugt von mehr als 180 aufweist.

7. Zusammensetzung nach Anspruch 6, **dadurch gekennzeichnet, dass** die organische Polycarbonsäure Citronensäure, Tricarballylsäure, 1,2,4-Butantricarbonsäure, Aconitsäure, Hemimellithsäure, Trimellithsäure und Trimesinsäure, 1,2,3,4-Butantetracarbonsäure (BTCA) oder Pyromellithsäure, vorzugsweise Citronensäure und 1,2,3,4-Butantetracarbonsäure ist.

8. Zusammensetzung nach einem der Ansprüche 1 bis 7, **dadurch gekennzeichnet, dass** die organische Polycarbonsäure 10 bis 50 %, vorzugsweise 15 bis 40 % des Gesamtgewichts der Feststoffe darstellt.

9. Zusammensetzung nach einem der Ansprüche 1 bis 8, **dadurch gekennzeichnet, dass** die organische Polycarbonsäure 10 bis 80 %, vorzugsweise 20 bis 70 % und vorteilhafterweise 30 bis 65 % des Gewichts der aus Polyglycerin und organischer Polycarbonsäure bestehenden Mischung darstellt.

10. Zusammensetzung nach einem der Ansprüche 1 bis 9, **dadurch gekennzeichnet, dass** der Veresterungskatalysator aus den Lewis-Säuren und -Basen, phosphorhaltigen Verbindungen und fluor- und borhaltigen Verbindungen ausgewählt ist.

11. Zusammensetzung nach Anspruch 10, **dadurch gekennzeichnet, dass** der Veresterungskatalysator Natriumhypophosphit, Natriumphosphit und Mischungen dieser Verbindungen und vorzugsweise Natriumhypophosphit ist.

12. Zusammensetzung nach einem der Ansprüche 1 bis 11, **dadurch gekennzeichnet, dass** der Veresterungskatalysator 2 bis 10 %, vorzugsweise 4 bis 8 % des Gesamtgewichts der Feststoffe darstellt.

13. Zusammensetzung nach einem der Ansprüche 1 bis 12, **dadurch gekennzeichnet, dass** der Veresterungskatalysator 0,5 bis 25 Gew.-%, vorzugsweise 5 bis 20 Gew.-%, und vorteilhafterweise 7 bis 16 Gew.-% der aus Polyglycerin und organischer Polycarbonsäure bestehenden Mischung darstellt.

14. Zusammensetzung nach einem der Ansprüche 1 bis 13, **dadurch gekennzeichnet, dass** der Weichmacher ein Polyester, insbesondere ein Dialkylfettsäureester, ein Diester von Isosorbid und von Fettsäure(n), ein acetyliertes Monoglycerid einer hydroxylierten Fettsäure oder ein Polyesterpolyol auf Basis von Dimeren ist.

15. Zusammensetzung nach einem der Ansprüche 1 bis 14, **dadurch gekennzeichnet, dass** der Weichmacher 0,5 bis 50 %, vorzugsweise 5 bis 40 % und vorteilhafterweise 10 bis 35 % des Gesamtgewichts der Feststoffe darstellt.

16. Zusammensetzung nach einem der Ansprüche 1 bis 15, **dadurch gekennzeichnet, dass** das Verdickungsmittel eine Carboxyalkylcellulose oder eine Hydroxyalkylcelluose ist.

17. Zusammensetzung nach einem der Ansprüche 1 bis 16, **dadurch gekennzeichnet, dass** das Verdickungsmittel 0,5 bis 25 %, vorzugsweise 2 bis 20 % und vorteilhafterweise 3 bis 17 % des Gesamtgewichts der Feststoffe darstellt.

18. Anstreichbarer Stoff aus anorganischen und/oder organischen Fasern, **dadurch gekennzeichnet, dass** sie eine Grundierung nach einem der Ansprüche 1 bis 17 enthält.

19. Anstreichbarer Stoff nach Anspruch 18, **dadurch gekennzeichnet, dass** die anorganischen Fasern aus Glas bestehen und die organischen Fasern aus mindestens einem Polymer bestehen oder aus pflanzlichen Fasern erhalten wurden.

20. Anstreichbarer Stoff nach Anspruch 18 oder 19, **dadurch gekennzeichnet, dass** er ein Flächengewicht von zwischen 30 und 1000 g/m$^2$ aufweist.

21. Anstreichbarer Stoff nach einem der Ansprüche 18 bis 20, **dadurch gekennzeichnet, dass** die Grundierung 15 bis 40 %, vorzugsweise 20 bis 35 % des Gewichts des anstreichbaren Stoffs ausmacht.

**Claims**

1. An aqueous finishing composition, in particular for paintable cloth, **characterized in that** it comprises:

   - at least one polyglycerol,
   - at least one organic polycarboxylic acid containing at least three carboxyl groups,
   - at least one esterification catalyst,
   - at least one plasticizer, and
   - at least one thickener chosen from cellulose derivatives, succinoglycans and xanthans.

2. The composition as claimed in claim 1, **characterized in that** the polyglycerol is a glycerol oligomer having a degree of polymerization of between 2 and 20, preferably of between 2 and 10 and advantageously of between 2 and 8.

3. The composition as claimed in claim 2, **characterized in that** the polyglycerol is diglycerol or a mixture of polyglycerols containing at least 50% by weight of diglycerol, triglycerol and tetraglycerol, preferably a mixture of diglycerol and triglycerol.

4. The composition as claimed in one of claims 1 to 3, **characterized in that** the polyglycerol represents 10% to 60%, preferably 20% to 50% and advantageously 20% to 45% of the total weight of the solids.

5. The composition as claimed in one of claims 1 to 4, **characterized in that** the organic polycarboxylic acid contains 3 to 15, and preferably 3 or 4 carboxyl groups.

6. The composition as claimed in one of claims 1 to 5, **characterized in that** the organic polycarboxylic acid is a monomer having a number-average molar mass of less than or equal to 1000, preferably less than or equal to 750, advantageously less than or equal to 500 and better still greater than 180.

7. The composition as claimed in claim 6, **characterized in that** the organic polycarboxylic acid is citric acid, tricarballylic acid, 1,2,4-butanetricarboxylic acid, aconitic acid, hemimellitic acid, trimellitic acid and trimesic acid, 1,2,3,4-butanetetracarboxylic acid (BTCA) or pyromellitic acid, preferably citric acid and 1,2,3,4-butanetetracarboxylic acid.

8. The composition as claimed in one of claims 1 to 7, **characterized in that** the organic polycarboxylic acid represents 10% to 50%, preferably 15% to 40% of the total weight of the solids.

9. The composition as claimed in one of claims 1 to 8, **characterized in that** the organic polycarboxylic acid represents 10% to 80%, preferably 20% to 70%, and advantageously 30% to 65% of the weight of the mixture formed by the polyglycerol and the organic polycarboxylic acid.

10. The composition as claimed in one of claims 1 to 9, **characterized in that** the esterification catalyst is chosen from Lewis acids and bases, compounds containing phosphorus and compounds containing fluorine and boron.

11. The composition as claimed in claim 10, **characterized in that** the esterification catalyst is sodium hypophosphite, sodium phosphite and mixtures of these compounds, and preferably sodium hypophosphite.

12. The composition as claimed in one of claims 1 to 11, **characterized in that** the esterification catalyst represents 2% to 10%, preferably 4% to 8% of the total weight of the solids.

13. The composition as claimed in one of claims 1 to 12, **characterized in that** the esterification catalyst represents 0.5% to 25%, preferably 5% to 20%, and advantageously 7% to 16% of the weight of the mixture formed by the polyglycerol and the organic polycarboxylic acid.

14. The composition as claimed in one of claims 1 to 13, **characterized in that** the plasticizer is a polyester, particularly a dialkyl ester of a fatty acid, a diester of isosorbide and fatty acid(s), an acetylated monoglyceride of a hydroxylated fatty acid, or a dimer-based polyester polyol.

15. The composition as claimed in one of claims 1 to 14, **characterized in that** the plasticizer represents 0.5% to 50%, preferably 5% to 40%, and advantageously 10% to 35% of the total weight of the solids.

16. The composition as claimed in one of claims 1 to 15, **characterized in that** the thickener is a carboxyalkyl cellulose or a hydroxyalkyl cellulose.

17. The composition as claimed in one of claims 1 to 16, **characterized in that** the thickener represents 0.5% to 25%, preferably 2% to 20%, and advantageously 3% to 17% of the total weight of the solids.

18. A paintable cloth comprising inorganic and/or organic yarns, **characterized in that** it comprises a finish as claimed in one of claims 1 to 17.

19. The paintable cloth as claimed in claim 18, **characterized in that** the inorganic yarns are made of glass and the organic yarns are formed of at least one polymer or are obtained from plant fibers.

20. The paintable cloth as claimed in claim 18 or 19, **characterized in that** it has a surface weight that of between 30 and 1000 g/m$^2$.

21. The paintable cloth as claimed in one of claims 18 to 20, **characterized in that** the finish represents 15% to 40%, preferably 20% to 35% of the weight of the paintable cloth.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 20120138723 A1

- WO 2010070248 A